# EUROPÄISCHE PATENTSCHRIFT

(11) **EP 2 306 055 B1**
(45) Veröffentlichungstag und Bekanntmachung des Hinweises auf die Patenterteilung: **02.01.2013**
(21) Anmeldenummer: 10014521.8
(22) Anmeldetag: 07.12.2007
(51) Int. Cl.: F16K 7/04, F16K 7/06, F16K 7/07

(54) **Quetschventil**
Pinch valve
Vanne à manchon

(30) Priorität: 12.02.2007 DE 102007006764
(43) Veröffentlichungstag der Anmeldung: 06.04.2011
(62) Teilanmeldung aus: 07847032.5
(73) Patentinhaber: FESTO AG & Co. KG, 73734 Esslingen (DE)
(72) Erfinder: Kees, Ulrich, 66424 Homburg (DE); Röhrig, Harald, 66583 Spiesen-Elversberg (DE)
(74) Vertreter: Abel, Martin

(56) Entgegenhaltungen:
- DE-B- 1 024 300
- JP-A- 62 278 382

## Beschreibung

Die Erfindung betrifft ein Quetschventil, mit einem Ventilgehäuse, in dem sich zwischen zwei Fluidanschlüssen ein eine flexible Umfangswand aufweisendes schlauchförmiges Ventilglied erstreckt, dessen Umfangswand quer zur Ventilglied-Längsachse zusammenquetschbar ist, um den Durchflussquerschnitt zu verändern, und das von einem seine radiale Aufweitung begrenzenden starren Stützrohr umschlossen ist, mit dem es zu einer in entnehmbarer Weise axial in das Ventilgehäuse eingesetzten patronenartigen Baueinheit zusammengesetzt ist und das aus mehreren in der Umfangsrichtung der Umfangswand des ventilgliedes um die Umfangswand herum aneinandergereihten, jeweils einen bogenförmigen Querschnitt aufweisenden Schalenelementen besteht, die in bezüglich der Ventilglied-Längsachse radialer Richtung außen an das schlauchförmige Ventilglied angesetzt sind.

Aus der DE 29 30 853 C2 ist ein Quetschventil bekannt, das als Bestandteil eines zahnärztlichen Instrumentes ausgeführt ist. Ein Griffkörper des Instrumentes fungiert als Ventilgehäuse, in das ein schlauchförmiges Ventilglied eingesetzt ist, das stirnseitig mit je einem Fluidanschluss kommuniziert. Das Ventilglied kann von einem Fluid durchströmt werden, wobei sich der Durchflussquerschnitt durch ein als Kugel ausgebildetes Quetschmittel verändern lässt, durch das die flexible Umfangswand des ventilgliedes mehr oder weniger weit zusammengequetscht werden kann. Das Ventilglied ist gemeinsam mit einem seine Umfangswand koaxial umschließenden Stützrohr als lösbar in das Ventilgehäuse eingesetzte patronenartige Baueinheit ausgebildet. Diese Baueinheit kann bei Bedarf leicht ausgewechselt werden. Allerdings sind mit dem gemäß DE 29 30 853 C2 vorgesehenen Stützrohr auch Probleme in der Handhabung verbunden. Es ist relativ umständlich, das in der Regel nicht sehr biegesteife Ventilglied in das Stützrohr einzusetzen.

Aus der DE 10 50 622 C geht ein Schlauch-Absperrventil hervor, bei dem ein schlauchförmiges Ventilglied auf einem Einsatzkörper montiert ist und außen auf das Ventilglied ein in Längsrichtung geteilter Schalenkörper aufgesetzt ist. Das Ventilgehäuse ist radial geteilt und wird beim Zusammenbau mit seinen beiden Teilen von entgegengesetzten Seiten her axial auf die den Schalenkörper enthaltende Einheit geschoben. Zum Auswechseln des Ventilgliedes muss das Ventilgehäuse folglich komplett zerlegt werden.

Bei einem aus der DE 10 24 300 B bekannten Schlauchventil ist das schlauchförmige Ventilglied in der Innenbohrung eines einstückigen Gehäuses angeordnet und von diesem radial abgestützt. Durch die Wandung dieses Gehäuses führen Kanäle, die den Durchtritt eines das Ventilglied zusammenquetschenden Fluides ermöglichen, wenn eine um das Gehäuse herum angeordnete Hülse axial verstellt wird.

Ein in der GB 1 021 540 erläutertes Strömungsventil enthält eine einen Strömungskanal unterteilende Trennwand, auf die ein als Ventilglied fungierender Schlauch aufgespannt ist. In Abhängigkeit vom Fluiddruck in einer den Schlauch umgebenden Kammer, kann der Schlauch zur Freigabe eines Strömungsquerschnittes von der Trennwand abheben. Die Kammer ist radial außen von einer Hülse begrenzt, an der sich der Schlauch abstützen kann.

Es sind auch bereits Quetschventile bekannt, bei denen als mit dem Ventilglied zusammenwirkendes Quetschmittel kein gegenständliches Quetschelement wie im Falle der DE 29 30 853 C2 eingesetzt wird, sondern ein fluidisches Druckmedium, beispielsweise Druckluft. Ein solches Quetschventil geht beispielsweise aus der nicht datierten Produktinformation "Pneumatisches Quetschventil Typ VMF/Pneumatic pinch valve type VMF" der Firma Armaturen & Separations GmbH hervor. Dort sind über das Ventilgehäuse hinaus keine Mittel zur Begrenzung der radialen Aufweitung des Ventilgliedes vorgesehen. Das schlauchförmige Ventilglied unterliegt daher stärkeren Beanspruchungen als im Falle seiner zusätzlichen radialen Abstützung.

Aus der JP 62-278382 A ist ein Quetschventil der eingangs genannten Art bekannt, dessen schlauchförmiges Ventilglied von einem gehäuseartigen Rahmen umschlossen ist, der axial in zwei Rahmenhalbkörper unterteilt ist, die von radial außen her an das Ventilglied angesetzt sind.

Eine wesentliche Aufgabe der vorliegenden Erfindung besteht darin, ein Quetschventil zu schaffen, dessen Ventilglied ohne Beeinträchtigung seiner Abstützung einfach installierbar ist.

Zur Lösung dieser Aufgabe ist vorgesehen, dass ein das aus mehreren Schalenelementen zusammengesetzte Stützrohr umschließender, die Schalenelemente zu der Rohrstruktur zusammenhaltender Sicherungskörper vorhanden ist.

Beim Zusammenbau der patronenartigen Baueinheit erübrigt sich somit ein aufwendiges Einstecken des Ventilgliedes in das Stützrohr. Stattdessen können die einzelnen Schalenelemente des Stützrohres von radial außen her an das schlauchförmige Ventilglied angesetzt werden, um somit das, in seiner Umfangsrichtung segmentierte, Stützrohr zu bilden. Nach wie vor besteht die Möglichkeit, die aus den Schalenelementen und dem Ventilglied zusammengesetzte patronenartige Baueinheit axial in das Ventilgehäuse einzuführen und bei Bedarf auch wieder zu entnehmen. Durch die Segmentierung des Stützrohres besteht bei lösbarer Anbringung der Schalenelemente überdies der Vorteil, dass ein verschlissenes Ventilglied leicht ausgewechselt werden kann, während man die Schalenelemente wieder verwendet. Um die Schalenelemente am Außenumfang des ventilgliedes auf einfache Weise zu fixieren, ist ein das segmentierte Stützrohr umschließender Sicherungskörper vorhanden.

Vorteilhafte Weiterbildungen der Erfindung gehen aus den Unteransprüchen hervor.

Bei dem Sicherungskörper handelt es sich bevorzugt um ein bezüglich des Ventilgehäuses separates Bauteil, das auch ein Bestandteil der patronenartigen Baueinheit sein kann. Zweckmäßig ist eine Ausgestaltung als das Stützrohr koaxial umschließendes Sicherungsrohr, das sich einfach aufstecken lässt, nachdem die Schalenelemente an das Ventilglied angesetzt wurden.

Besonders zweckmäßig ist eine Anordnung, bei der das Stützrohr über lediglich zwei Schalenelemente verfügt, die dann bevorzugt eine Bogenerstreckung von 180° aufweisen. Es handelt sich insbesondere um identische Bauteile, sodass eine kostensparende Herstellung möglich ist.

Insbesondere wenn der Rohrkanal des Stützrohres und/oder die Umfangswand des Ventilgliedes eine nicht kreisförmige Querschnittskontur aufweisen, empfiehlt sich die Realisierung von Positionsvorgabemitteln an zum einen den Schalenelementen und zum anderen an dem Ventilglied, die beim Ansetzen der Schalenelemente derart formschlüssig ineinandergreifen, dass in der Umfangsrichtung der Ventilglied-Längsachse eine vorbestimmte Relativposition zwischen diesen Komponenten eingenommen wird.

Vorteilhaft ist dies insbesondere dann, wenn der Rohrkanal und/oder die Umfangswand über einen länglichen Querschnitt verfügen, sodass eine gegenseitige Abstimmung der Drehposition vorteilhaft ist. Die längliche Querschnittsform der Umfangswand hat den Vorteil, dass bei der externen Fluidbeaufschlagung der Umfangswand ein Zusammenquetschen in einer Vorzugsrichtung stattfindet, quer zur Querschnitts-Längsachse. Dadurch kann der Durchflussquerschnitt sehr zuverlässig abgesperrt werden.

Von Vorteil ist es, wenn die Schalenelemente in axialer Richtung ein Übermaß bezüglich des lichten Abstands zweier endseitiger Flanschabschnitte des flexiblen Ventilgliedes aufweisen. Dadurch wird die Umfangswand des Ventilgliedes beim Zusammensetzen der patronenartigen Baueinheit axial gestreckt, was eine radial nach außen orientierte Vorspannung der Umfangswand zur Folge hat, sodass die Aufweitung der Umfangswand unterstützt wird, wenn momentan von außen her keine Quetschkräfte auf die Umfangswand ausgeübt werden.

Ein, mehrere oder sämtliche Schalenelemente können über mindestens eine radiale Durchbrechung verfügen, durch die hindurch die Umfangswand mit einem Quetschmittel beaufschlagbar ist, um das zur Variation des Durchflussquerschnittes erforderliche Zusammenquetschen der Umfangswand hervorzurufen. Je nach Ausführungsform kommt als Quetschmittel ein mechanisches Quetschelement oder unmittelbar ein Druckmedium in Frage. Bei dem Druckmedium handelt es sich insbesondere um Druckluft, denkbar sind aber auch andere Gase sowie auch eine Druckflüssigkeit.

Der Sicherungskörper kann wie das Stützrohr mindestens eine radiale Durchbrechung für ein die Umfangswand des Ventilgliedes beaufschlagendes Quetschmittel aufweisen.

Nachfolgend wird die Erfindung anhand der beiliegenden Zeichnung näher erläutert. In dieser zeigen:
- Figur 1: eine mögliche erste Bauform des erfindungsgemäßen Quetschventils im Längsschnitt in der maximalen Offenstellung,
- Figur 2: das Quetschventil aus Figur 1 im Längsschnitt in der Schließstellung,
- Figur 3: einen Querschnitt gemäß Schnittlinie III-III aus Figur 1,
- Figur 4: einen Querschnitt gemäß Schnittlinie IV-IV aus Figur 2,
- Figur 5: zu einer patronenartigen Baueinheit zusammengefasste Komponenten des Quetschventils der Figuren 1 bis 4 in einer Einzeldarstellung,
- Figur 6: einen Längsschnitt durch eine weitere Ausführungsform des Quetschventils in der maximalen Offenstellung,
- Figur 7: das Quetschventil aus Figur 6 in der Schließstellung,
- Figur 8: einen Querschnitt gemäß Schnittlinie VIII-VIII aus Figur 6,
- Figur 9: einen Querschnitt gemäß Schnittlinie IX-IX aus Figur 7,
- Figur 10: zu einer patronenartigen Baueinheit zusammengefasste Komponenten des Quetschventils der Figuren 6 bis 9 in einer Einzeldarstellung,
- Figur 11: in einer Explosionsdarstellung das schlauchförmige Ventilglied mit daran anzusetzenden Schalenelementen des zugeordneten Stützrohres und
- Figur 12: die aus Ventilglied und Stützrohr zusammengesetzte Baueinheit, links im Bild, zusammen mit zwei möglichen Ausführungsformen eines Sicherungsrohres, in das die genannte Baueinheit einsteckbar ist, um die Schalenelemente des Stützrohres am Außenumfang des ventilgliedes zu fixieren.

Die beiden in ihrer Gesamtheit mit Bezugsziffer 1 bezeichneten Quetschventile enthalten ein Ventilgehäuse 2, das einen Aufnahmeraum 3 umgibt. Bevorzugt umfasst das Ventilgehäuse 2 ein rohrförmiges Gehäusehauptteil 4, an dessen beiden Stirnseiten je ein eine Deckelfunktion übernehmendes Anschlussstück 5, 6 angeordnet ist. Wenigstens eines und zweckmäßigerweise beide Anschlussstücke 5, 6 sind bezüglich des Gehäusehauptteils 4 separate Komponenten und lösbar an dem Gehäusehauptteil 4 angebracht. Beispielhaft sind sie jeweils stirnseitig in das Gehäusehauptteil 4 eingeschraubt. Die hierbei miteinander kooperierenden Innen- und Außengewinde sind bei 7 angedeutet.

Jedes Anschlussstück 5, 6 ist mit einem Fluidanschluss 8 ausgestattet, der von einem axialen Durchgangskanal gebildet ist. Ihnen zugeordnete Anschlussmittel 12, beispielsweise Innengewinde, ermöglichen das Anschließen nicht näher gezeigter Fluidleitungen, über die ein durch das Quetschventil 1 zu steuerndes, im Folgenden vereinfacht als "Fluid" bezeichnetes fließfähiges Medium zu- und abführbar ist.

In dem Aufnahmeraum 3 erstreckt sich zwischen den beiden Anschlussstücken 5, 6 ein eine flexible, bevorzugt gummielastische Umfangswand 13 aufweisendes schlauchförmiges Ventilglied 14. Dieses ist von einem Steuerkanal 15 koaxial durchsetzt, der mit den beiden Fluidanschlüssen 8 in Verbindung steht.

An seinen beiden Enden, im Anschluss an die Umfangswand 13, besitzt das Ventilglied 14 je einen radial abstehenden, bevorzugt ringförmigen Flanschabschnitt 16. Er besteht zweckmäßigerweise aus dem gleichen Material wie die Umfangswand 13. Bevorzugt ist das schlauchförmige Ventilglied 14 insgesamt ein einstückiges Element.

Die Flanschabschnitte 16 liegen, um die Mündung des jeweils zugeordneten Fluidanschlusses 8 herum, unter Abdichtung an den beiden Anschlussstücken 5, 6 an. Dadurch ergibt sich eine durchgängig abgedichtete Verbindung.

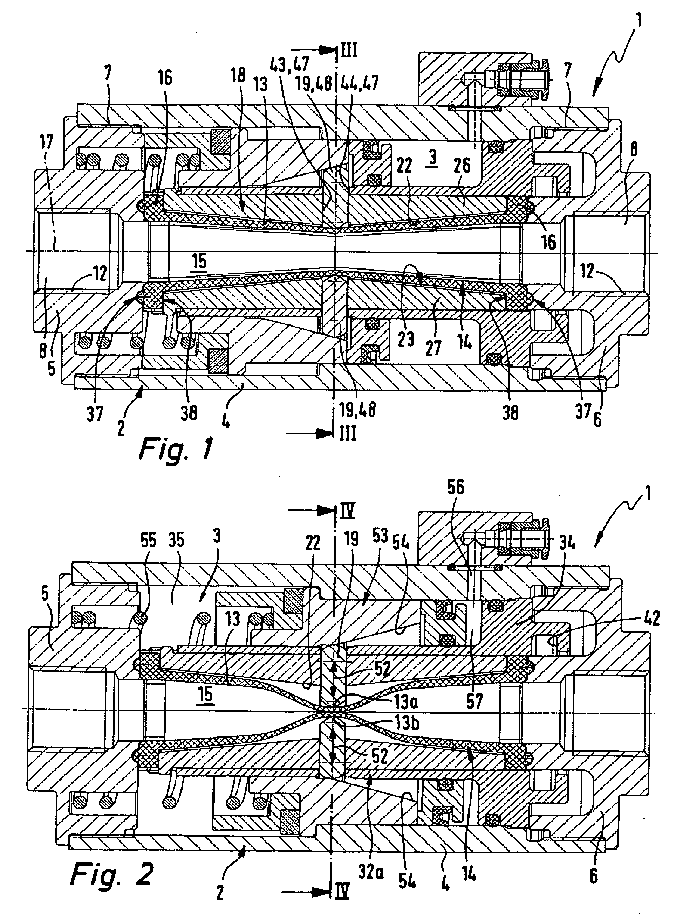

Über je einen der Fluidanschlüsse 8 kann ein zu steuerndes Fluid eingespeist werden, das durch den Steuerkanal 15 hindurch zum jeweils anderen Fluidanschluss 8 gelangt und über diesen das Quetschventil 1 wieder verlässt. Durch ein oder mehrere Quetschmittel 19 kann die Umfangswand 13 mehr oder weniger stark zusammengequetscht werden, um den von dem Steuerkanal 15 zur Verfügung gestellten Durchflussquerschnitt zu verändern. Wird keine Quetschkraft aufgebracht, liegt die aus Figuren 1, 3, 6 und 8 ersichtliche maximale Offenstellung vor, in der dem Fluid der maximale Durchflussquerschnitt zur Verfügung steht. Die Figuren 2, 4, 7 und 9 zeigen die Schließstellung, in der die Umfangswand 13 durch das oder die Quetschmittel 19 so weit zusammengequetscht ist, dass sich quer zur Ventilglied-Längsachse 17 gegenüberliegende Wandabschnitte 13a, 13b dichtend aneinander anliegen und den Durchgang durch den Steuerkanal 15 versperren.

Durch Variation der Quetschkraft lassen sich auch Zwischenstellungen vorgeben, in denen der Durchflussquerschnitt zwischen Null und dem Maximum liegt.

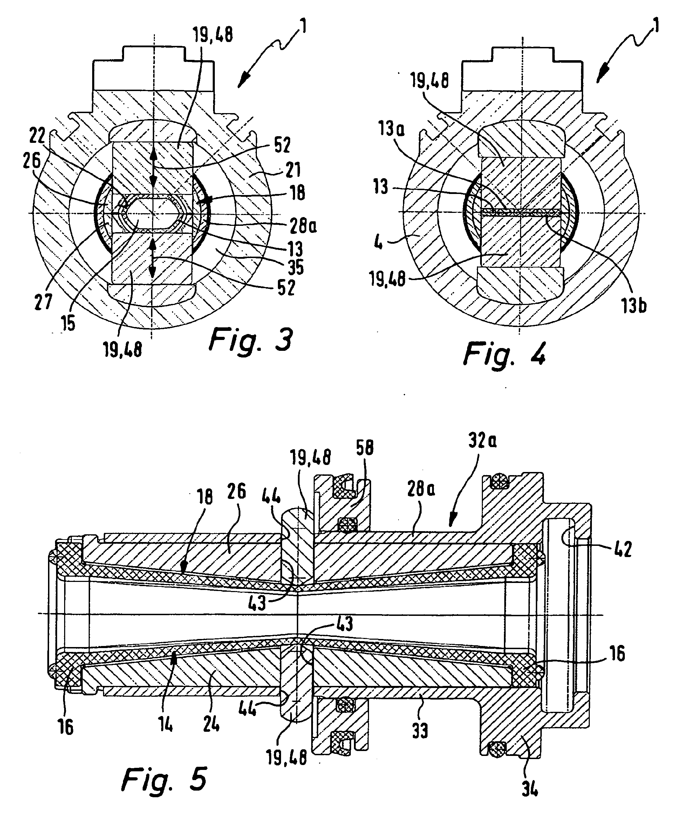

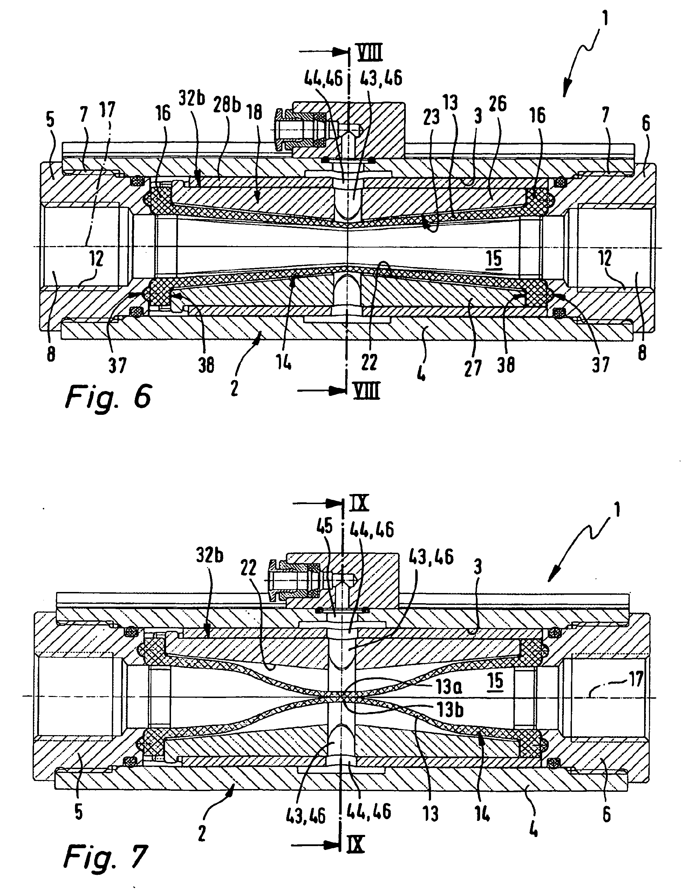

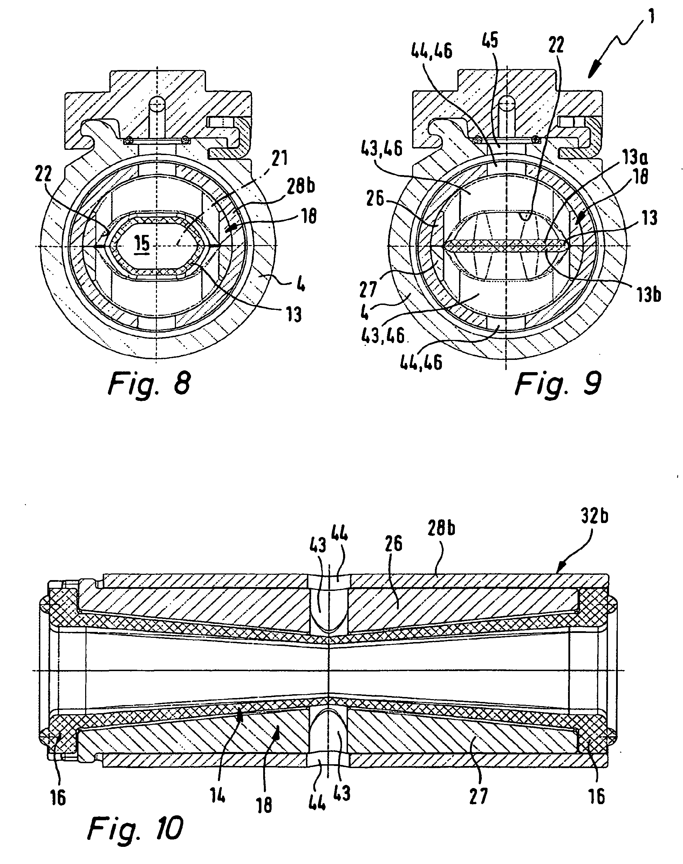

Bei dem Ventilglied 14 handelt es sich vorzugsweise um ein gummielastisches Formteil, dessen Umfangswand 13 im nicht radial beaufschlagten Ausgangszustand, allein aufgrund der eigenen Formstabilität, eine von axial außen her zu ihrem längsmittigen Bereich hin sich verjüngende Formgebung aufweist. Dies ist aus Figuren 1 und 6 gut erkennbar. Für den Querschnitt der Umfangswand 13 gilt, dass dieser zweckmäßigerweise länglich ausgebildet ist, was sich gut anhand der Figuren 3 und 8 nachvollziehen lässt.

Im Betrieb wird die Umfangswand 13 des schlauchförmigen Ventilgliedes 14 von dem im Steuerkanal 15 strömenden Druckmedium im Sinne einer radialen Aufweitung beaufschlagt. Ein das Ventilglied 14 zumindest im Bereich der Umfangswand 13 koaxial umschließendes starres Stützrohr 18 verhindert dabei ein Überdehnen des flexiblen Materials und gibt insbesondere die von der Umfangswand 13 in der maximalen Offenstellung eingenommene Außenkontur vor.

Der Innenraum des Stützrohres 18, als Rohrkanal 22 bezeichnet, ist von dem Ventilglied 14 koaxial durchsetzt, wobei seine Innenfläche eine Stützfläche 23 für die Umfangswand 13 bildet. Zweckmäßigerweise ist der Rohrkanal 22 derart gestaltet, dass seine Innenkontur der im unbeaufschlagten Ausgangszustand vorliegenden Außenkontur der Umfangswand 13 entspricht. Dies hat zur Folge, dass die Umfangswand 13 bei Fluidbeaufschlagung des Steuerkanals 15 über ihren Ausgangszustand hinaus praktisch nicht radial ausgedehnt wird. Somit wird die Umfangswand ausgehend von der Neutralstellung immer nur zu einer radialen Seite hin verformt, was der Lebensdauer zugute kommt.

In Anpassung an den länglichen Querschnitt der Umfangswand 13 besitzt zweckmäßigerweise auch der Rohrkanal 22 eine längliche Querschnittsform. Hierbei fallen die beiderseitigen Querschnitts-Längsachsen 21 zweckmäßigerweise zusammen.

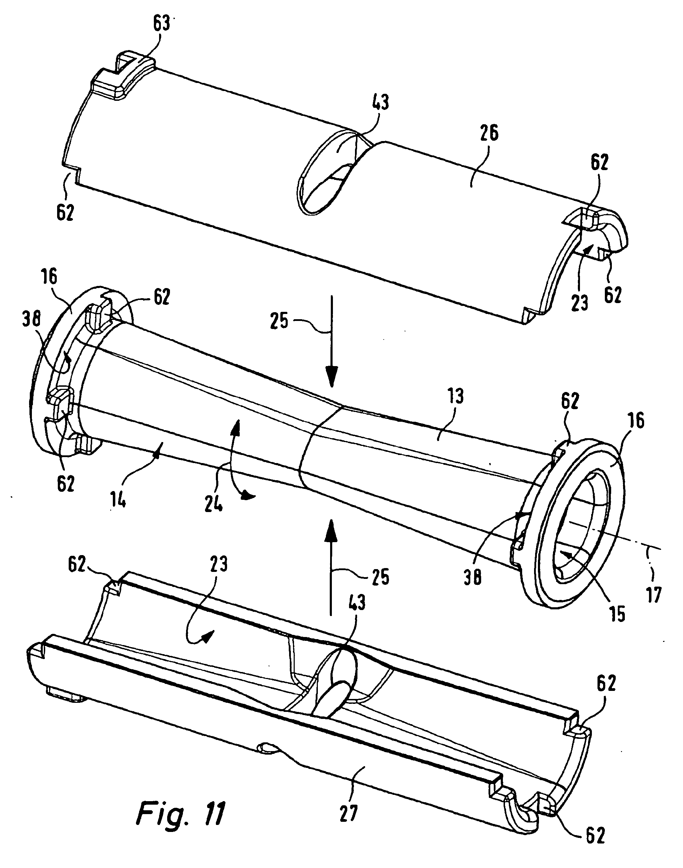

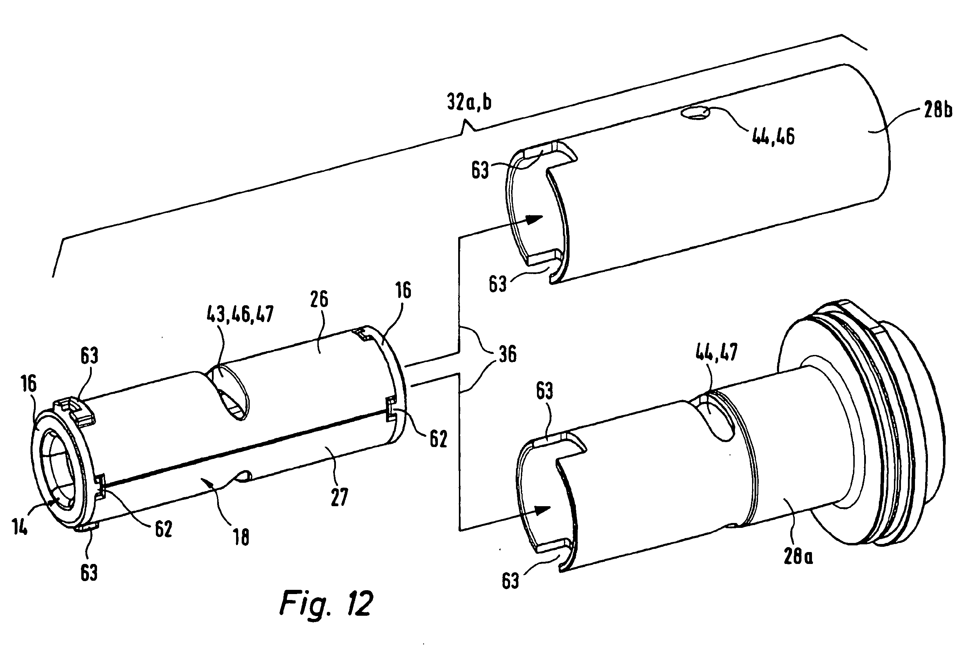

Wie sich insbesondere auch den Figuren 11 und 12 entnehmen lässt, handelt es sich bei dem Stützrohr 18 nicht um einen einstückigen, sondern um einen in seiner Umfangsrichtung segmentierten Rohrkörper. Es setzt sich aus mehreren in der durch einen Doppelpfeil 24 angedeuteten Umfangsrichtung der Umfangswand 13 um diese herum aneinandergereihten, gemäß Pfeilen 25 von radial außen her an den Außenumfang des Ventilgliedes 14 angesetzten Schalenelementen 26, 27 zusammen. Letztere haben jeweils einen bogenförmigen Querschnitt, sodass sie im montierten Zustand die Rohrstruktur des Stützrohres definieren.

Zumindest außen ist das zusammengesetzte Stützrohr 18 im Wesentlichen kreiszylindrisch gestaltet.

Damit die Schalenelemente 26, 27 zusammenhalten, sind sie peripher von einem bei den beiden Ausführungsbeispielen jeweils unterschiedlich gestalteten Sicherungskörper 28a, 28b umschlossen. Dieser kann sich beispielsweise aus einem oder mehreren Ringelementen zusammensetzen. Vorzugsweise ist der Sicherungskörper 28a, 28b rohrförmig ausgebildet, wobei er das in seiner Umfangsrichtung segmentierte Stützrohr 18 koaxial umschließt.

Die Funktion des Sicherungskörpers 28a, 28b könnte unmittelbar von dem Gehäusehauptteil 4 übernommen werden. Es ist jedoch vor allem im Hinblick auf eine einfache Handhabung eine Bauform vorzuziehen, bei der der Sicherungskörper 28a, 28b ein bezüglich des Ventilgehäuses 2 separates Bauteil ist, das lösbar in den Aufnahmeraum 3 eingesetzt werden kann.

Der Sicherungskörper 28a, 28b wirkt wie eine Klammer oder Manschette, die verhindert, dass die Schalenelemente 26, 27 durch den im Steuerkanal 15 herrschenden Fluiddruck nach außen gedrückt werden. Die von dem Fluid über die Umfangswand 13 in die Schalenelemente 26, 27 eingeleiteten Druckkräfte werden also von dem bevorzugt rohrförmigen Sicherungskörper 28a, 28b aufgenommen. Durch die geschlossene Kontur des Sicherungskörpers 28a, 28b wird hierdurch das Ventilgehäuse 2 nicht belastet.

Ein besonderer Vorteil des Quetschventils ist darin begründet, dass das Ventilglied 14, das segmentierte Stützrohr 18 und der jeweils verwendete Sicherungskörper 28a, 28b zu einer in Figuren 5 und 10 einzeln abgebildeten patronenartigen Baueinheit 32a, 32b zusammengefasst sind. Diese Baueinheit 32a, 32b ist in ihrer Gesamtheit in entnehmbarer Weise axial in den Aufnahmeraum 3 des Ventilgehäuses 2 eingesetzt. Die Außenkontur der patronenartigen Baueinheit 32a, 32b ist hierbei so auf die von dem Gehäusehauptteil 4 definierte Innenkontur des Aufnahmeraums 3 abgestimmt, dass das axiale Einsetzen und Entnehmen durch einen einfachen Einsteckvorgang und Herausziehvorgang durchgeführt werden kann.

Ist der Sicherungskörper 28a wie bei dem Ausführungsbeispiel der Figuren 6 bis 10 als einfacher, radial nicht abgestufter Rohrkörper ausgebildet, kann er einfach in den komplementär zylindrisch konturierten Aufnahmeraum 3 eingesteckt werden. Hierbei ergibt sich eine großflächige umfangsseitige Abstützung an dem Gehäusehauptteil 4.

Bei dem Ausführungsbeispiel der Figuren 1 bis 5 hingegen ist der Sicherungskörper 28b außen radial abgestuft und enthält einen den größten Teil seiner Länge einnehmenden Rohrabschnitt 33, an den sich einenends ein einen größeren Durchmesser aufweisender Kolbenabschnitt 34 anschließt. In diesem Fall stützt sich der Sicherungskörper 28b im montierten Zustand nur über seinen Kolbenabschnitt 34 direkt an der Umfangswand des Aufnahmeraumes 3 ab. Zwischen dem Rohrabschnitt 33 und der Wandung des Gehäusehauptteils 4 verbleibt ein konzentrischer Ringraum 35, dessen Funktion noch erläutert wird.

Der Zusammenbau der patronenartigen Baueinheit 32a, 32b geschieht am einfachsten dadurch, dass zunächst gemäß Figur 11 die Schalenelemente 26, 27 an das Ventilglied 14 angesetzt und anschließend diese vormontierte Baueinheit in den ausgewählten Sicherungskörper 28a oder 28b eingesteckt wird, wie dies in Figur 12 durch die Pfeile 36 angedeutet ist.

Im in dem Aufnahmeraum 3 fest montierten Zustand ist die patronenartige Baueinheit 32a, 32b zweckmäßigerweise axial zwischen den beiden Anschlussstücken 5, 6 verspannt. Diese drücken auf die ihnen zugewandte äußere Stirnfläche 37 des benachbarten Flanschabschnittes 16, der sich seinerseits mit seiner axial entgegengesetzt orientierten inneren axialen Stirnfläche 38 an der Stirnseite des sich zwischen den Flanschabschnitten 16 erstreckenden segmentierten Stützrohres 18 abstützt.

Wie man aus der Zeichnung gut entnehmen kann, ist die in Richtung der Ventilglied-Längsachse 17 gemessene Länge der Schalenelemente 26, 27 so gewählt, dass sie in den zwischen den beiden endseitigen Flanschabschnitten 16 definierten axialen Zwischenraum im Bereich des Außenumfanges der Umfangswand 13 einsetzbar sind. Das Stützrohr 18 wird somit stirnseitig von den beiden Flanschabschnitten 16 flankiert.

Bevorzugt sind die Schalenelemente 26, 27 geringfügig länger als der vor dem Anbringen an dem Ventilglied 14 zwischen dessen beiden Flanschabschnitten 16 vorhandene lichte axiale Abstand. Dies führt dazu, dass die Flanschabschnitte 16 durch das angesetzte Stützrohr 18 geringfügig voneinander weggedrückt sind, woraus eine axiale Zugvorspannung der Umfangswand 13 resultiert. Dies wiederum hat zur Folge, dass die Umfangswand 13 auch im drucklosen Zustand des Steuerkanals 15 in Richtung der maximalen Offenstellung nach radial außen beaufschlagt wird. Dies begünstigt die Einnahme der maximalen Offenstellung, wenn keine Quetschmittel auf die Umfangswand 13 einwirken.

Um die patronenartige Baueinheit 32a, 32b zu entnehmen, genügt das Herausschrauben eines der Anschlussstücke 5 oder 6. Dann kann die Baueinheit 32a, 32b herausgezogen oder herausgeschüttelt werden.

Bei der Ausführungsform der Figuren 6 bis 10 kann die patronenartige Baueinheit 32b aufgrund ihres symmetrischen Aufbaues wahlweise über die eine oder die andere axiale Stirnseite des Gehäusehauptteils 4 entnommen und wieder eingesetzt werden. Bei dem Ausführungsbeispiel der Figuren 1 bis 5 geschieht die Montage und Demontage bevorzugt über diejenige Stirnseite des Gehäusehauptteils 4, in deren Bereich der Kolbenabschnitt 34 zu liegen kommt. Eine im Bereich des Kolbenabschnittes 34 in dem Sicherungskörper 28a ausgebildete hinterschnittene Aussparung 42 ermöglicht bei entferntem Anschlussstück 6 ein einfaches Hintergreifen mit einem Werkzeug oder von Hand, um die gesamte Baueinheit 32a herauszuziehen.

Obgleich das Stützrohr 18 durch mehr als zwei Schalenelemente 26, 27 realisiert werden könnte, empfiehlt sich die Variante des Ausführungsbeispiels, bei der sich das Stützrohr 18 aus lediglich zwei Schalenelementen 26, 27 zusammensetzt, die jeweils in der Umfangsrichtung 24 eine Bogenerstreckung von 180° aufweisen. Man kann hier von zwei Halbschalen sprechen.

Damit ein oder mehrere Quetschmittel 19 ungehindert auf den Außenumfang der Umfangswand 13 einwirken können, sind die Wandung des Stützrohres 18 und die Wandung des Sicherungskörpers 28a, 28b von je mindestens einer Durchbrechung 43, 44 radial durchsetzt, die so miteinander fluchten, dass das oder die Quetschmittel 19 hindurchtreten können. Bevorzugt enthält jedes Schalenelement 26, 27 eine Durchbrechung 43, die mit einer radial gegenüberliegenden Durchbrechung 44 des sie umschließenden Sicherungskörpers 28a, 28b fluchtet.

Die Anzahl der derart miteinander fluchtenden Durchbrechungen 43, 44 ist allerdings beliebig. Es könnte auch nur ein Durchbrechungspaar 43, 44 vorhanden sein, wie auch prinzipiell mehr als zwei solcher Durchbrechungspaare 43, 44 realisierbar wären.

Bei dem Ausführungsbeispiel der Figuren 6 bis 10 besteht das Quetschmittel aus einem Druckmedium, das über einen das Ventilgehäuse 2 durchsetzenden Betätigungskanal 45 hindurch in den Aufnahmeraum 3 eingespeist werden kann. Hier fungieren dann die Durchbrechungen 43, 44 jeweils als Fluidkanal 46, durch den hindurch das zur Betätigung verwendete Druckmedium in den Rohrkanal 22 strömen kann, um die Umfangswand 13 mit einer fluidischen Klemmkraft zu beaufschlagen.

Bei dem Ausführungsbeispiel der Figuren 1 bis 5 hingegen fungieren die Durchbrechungen 43, 44 als Durchgriffsöffnungen 47, in denen je ein als Quetschmittel 19 dienendes gegenständliches Quetschelement 48 gemäß Doppelpfeil 52 radial verschiebbar gelagert ist. Diese Quetschelemente können mechanisch auf die Umfangswand 13 einwirken, um die erforderliche Quetschkraft auszuüben.

Die radiale Stellkraft zur Betätigung der Quetschelemente 48 liefert bevorzugt eine ringförmige Beaufschlagungseinrichtung 53, die in dem oben erwähnten Ringraum 35 koaxial um die eingesetzte patronenartige Baueinheit 32a herum in axial bewegbarer Weise angeordnet ist. Der Rohrabschnitt 33 bildet hierbei ein Führungselement für eine axial verschiebbare Lagerung der Beaufschlagungseinrichtung 53.

An der Beaufschlagungseinrichtung 53 angeordnete schräge Beaufschlagungsflächen 54 übergreifen die Quetschelemente 48 radial außen und drücken diese in Abhängigkeit von der Axialposition der Beaufschlagungseinrichtung 53 mehr oder weniger weit nach radial innen.

Eine ebenfalls in dem Ringraum 35 angeordnete mechanische Federeinrichtung 55 wirkt ständig in einem dahingehenden Sinne auf die Beaufschlagungseinrichtung 53 ein, dass diese die Quetschelemente 48 in Richtung der Schließstellung vorspannt. Dieses Quetschventil ist vom Typ "Normalerweise geschlossen" und nimmt die Schließstellung ein, solange kein Betätigungssignal ansteht.

Als Betätigungssignal wird beim Ausführungsbeispiel über einen das Ventilgehäuse 2 durchsetzenden Betätigungskanal 56 ein fluidisches Druckmedium in eine Betätigungskammer 57 eingespeist, die durch die Beaufschlagungseinrichtung 53 innerhalb des Ringraumes 35 fluiddicht abgeteilt ist. Das mit ausreichend hohem Druck in die Betätigungskammer 57 zugeführte Betätigungsfluid kann die Beaufschlagungseinrichtung 53 entgegen der Federkraft verschieben, sodass sich die Quetschelemente 48 zur Freigabe des Steuerkanals 15 nach radial außen bewegen können.

Die die Federkraft überwindende Stellkraft könnte auch auf andere Weise als durch eine fluidische Kraft aufgebracht werden, beispielsweise elektrisch oder manuell.

Im Gegensatz zu dieser beschriebenen Bauform ist das Quetschventil der Figuren 6 bis 10 vom Typ "Normalerweise offen". Hier liegt der maximale Durchflussquerschnitt des Steuerkanals 15 vor, wenn über den Betätigungskanal 45 kein Druckmedium eingespeist wird und somit kein Betätigungssignal ansteht.

Bei dem Ausführungsbeispiel der Figuren 1 bis 5 können die Quetschelemente 48 sowie ein durch das in der Betätigungskammer 57 befindliche Betätigungsfluid beaufschlagbarer Betätigungskolben 58 der Beaufschlagungseinrichtung 53 Bestandteile der patronenartigen Baueinheit 32a, 32b sein. Man erkennt dies gut in Figur 5.

Bei beiden Ausführungsbeispielen wäre es möglich, die Sicherungskörper 28a, 28b als Komponenten auszubilden, die stets im Ventilgehäuse 2 verbleiben und somit nicht zu der patronenartigen Baueinheit 32a, 32b gehören. In diesem Falle würde die patronenartige Baueinheit 32a, 32b allein aus dem Ventilglied 14 und den Schalenelementen 26, 27 bestehen. Dies gilt auch dann, wenn auf einen Sicherungskörper 28a, 28b komplett verzichtet wird. Wenn beispielsweise keine Notwendigkeit besteht, die Schalenelemente 26, 27 abnehmbar am Ventilglied 14 zu befestigen, könnten diese beispielsweise auch stoffschlüssig miteinander verbunden werden, beispielsweise durch Verkleben oder Verschweißen.

Es wäre auch denkbar, die Schalenelemente 26, 27 unmittelbar selbst miteinander zu verrasten oder auf andere Weise miteinander zu verbinden, sowohl lösbar als auch unlösbar.

Insbesondere wenn der Rohrkanal 22 und/oder die Umfangswand 13 keinen kreisförmigen Querschnitt aufweisen und daher eine gewisse relative Winkellage zwischen dem Ventilglied 14 und dem Stützrohr 18 einzuhalten ist, sollten Positionsvorgabemittel 62 vorhanden sein, die die Montageposition vorgeben und auch später noch sicherstellen. Beispielhaft sind solche Positionsvorgabemittel 62 zum einen an den Schalenelementen 26, 27 und zum anderen an dem Ventilglied 14 so ausgebildet, dass sie bei Einnahme der gewünschten Relativposition formschlüssig ineinandergreifen. Dadurch wird insbesondere eine Verdrehsicherung in der Umfangsrichtung der Ventilglied-Längsachse 17 erreicht.

Beispielhaft sind als stirnseitige Aussparungen ausgebildete Positionsvorgabemittel 62 an den Stirnseiten der Schalenelemente 26, 27 ausgebildet, während komplementäre vorsprungartige Positionsvorgabemittel 62 an den einander zugewandten inneren Stirnflächen 38 der Flanschabschnitte 16 angeformt sind. Der formschlüssige Eingriff stellt sich beim Ansetzen der Schalenelemente 26, 27 ein, wobei die Montage durch die Gummielastizität des Ventilgliedes 14 begünstigt wird.

Auch zwischen der aus Stützrohr 18 und Ventilglied 14 bestehenden Baueinheit und dem zugeordneten Sicherungskörper 28a, 28b empfehlen sich Verdrehsicherungsmaßnahmen zur Vorgabe einer festen Drehwinkelposition zwischen diesen Komponenten. Exemplarisch sind daher ebenfalls formschlüssig ineinander eingreifende weitere Positionsvorgabemittel 63 an den Sicherungskörpern 28a, 28b und an den Schalenelementen 26, 27 ausgebildet. Bevorzugt handelt es sich um an einem Endbereich der Schalenelemente 26, 27 von diesen radial abstehende Vorsprünge, die in stirnseitige Aussparungen des Sicherungskörpers 28a, 28b formschlüssig eingreifen, wenn die Bauteile zusammengesteckt werden.

Die patronenartig installierbare Baueinheit 32a, 32b erleichtert und beschleunigt einen eventuellen Austausch eines verschlissenen ventilgliedes 14. Sind die Schalenelemente 26, 27 lösbar miteinander verbunden, können sie wieder verwendet werden, und der Austausch beschränkt sich auf das Ventilglied 14 als solches. Allerdings wird es auch als besonders sinnvoll angesehen, zumindest die Baueinheit bestehend aus Ventilglied 14 und Schalenelementen 26, 27 als insgesamt austauschbare Einheit bereitzustellen, da dies einen raschen Austausch ohne Zeitverlust ermöglicht.

## Patentansprüche

1. Quetschventil, mit einem Ventilgehäuse (2), in dem sich zwischen zwei Fluidanschlüssen (8) ein eine flexible Umfangswand (13) aufweisendes schlauchförmiges Ventilglied (14) erstreckt, dessen Umfangswand (13) quer zur Ventilglied-Längsachse (17) zusammenquetschbar ist, um den Durchflussquerschnitt zu verändern, und das von einem seine radiale Aufweitung begrenzenden starren Stützrohr (18) umschlossen ist, mit dem es zu einer in entnehmbarer Weise axial in das Ventilgehäuse (2) eingesetzten patronenartigen Baueinheit (32a, 32b) zusammengesetzt ist und das aus mehreren in der Umfangsrichtung (24) der Umfangswand (13) des Ventilgliedes (14) um die Umfangswand (13) herum aneinandergereihten, jeweils einen bogenförmigen Querschnitt aufweisenden Schalenelementen (26, 27) besteht, die in bezüglich der Ventilglied-Längsachse (17) radialer Richtung außen an das schlauchförmige Ventilglied (14) angesetzt sind, **dadurch gekennzeichnet, dass** ein das aus mehreren Schalenelementen (26, 27) zusammengesetzte Stützrohr (18) umschließender, die Schalenelemente (26, 27) zu der Rohrstruktur zusammenhaltender Sicherungskörper (28a, 28b) vorhanden ist.

2. Quetschventil nach Anspruch 1, **dadurch gekennzeichnet, dass** der Sicherungskörper (28a, 28b) ein bezüglich des Ventilgehäuses (2) separates Bauteil ist.

3. Quetschventil nach Anspruch 1 oder 2, **dadurch gekennzeichnet, dass** der Sicherungskörper (28a, 28b) rohrförmig ausgebildet ist und das Stützrohr (18) koaxial umschließt.

4. Quetschventil nach einem der Ansprüche 1 bis 3, **dadurch gekennzeichnet, dass** der Sicherungskörper (28a, 28b) ein Bestandteil der lösbar in das Ventilgehäuse (2) eingesetzten patronenartigen Baueinheit (32a, 32b) ist.

5. Quetschventil nach einem der Ansprüche 1 bis 4, **dadurch gekennzeichnet, dass** der Sicherungskörper (28a, 28b) ein Führungselement für eine ihn koaxial umschließende, axial bewegliche Beaufschlagungseinrichtung (53) bildet, die auf mindestens ein radial bewegliches Quetschelement (48) einwirken kann, durch das die Umfangswand (13) des Ventilgliedes (14) zusammenquetschbar ist.

6. Quetschventil nach einem der Ansprüche 1 bis 5, **dadurch gekennzeichnet, dass** der Sicherungskörper (28a, 28b) im Umfangsbereich des Ventilgliedes (14) mindestens eine radiale Durchbrechung (44) aufweist, die den Durchtritt eines auf die Umfangswand (13) des Ventilgliedes (14) einwirkenden Quetschmittels (19) ermöglicht.

7. Quetschventil nach einem der Ansprüche 1 bis 6, **dadurch gekennzeichnet, dass** die aus Ventilglied (14) und Stützrohr (18) bestehende Baugruppe lösbar in den Sicherungskörper (28a, 28b) eingesteckt ist.

8. Quetschventil nach Anspruch 7, **dadurch gekennzeichnet, dass** an dem Sicherungskörper (28a, 28b) und an den Schalenelementen (26, 27) des Stützrohres (18) formschlüssig ineinandergreifende, die relative Drehwinkellage vorgebende Positionsvorgabemittel (62) vorhanden sind.

9. Quetschventil nach einem der Ansprüche 1 bis 8, **dadurch gekennzeichnet, dass** das Stützrohr (18) aus lediglich zwei Schalenelementen (26, 27) zusammengesetzt ist, die jeweils eine Bogenerstreckung von 180° aufweisen.

10. Quetschventil nach einem der Ansprüche 1 bis 9, **dadurch gekennzeichnet, dass** an den Schalenelementen (26, 27) und an dem Ventilglied (14) formschlüssig ineinandergreifende Positionsvorgabemittel (62) angeordnet sind, die die in der Umfangsrichtung (24) bezüglich des Ventilgliedes (14) eingenommene Umfangsposition der Schalenelemente (26, 27) vorgeben.

11. Quetschventil nach einem der Ansprüche 1 bis 10, **dadurch gekennzeichnet, dass** das Ventilglied (14) an seinen beiden Enden jeweils einen radial abstehenden Flanschabschnitt (16) aufweist, wobei das Stützrohr (18) axial zwischen diesen beiden Flanschabschnitten (16) angeordnet ist und stirnseitig von diesen flankiert wird und wobei die Länge des Stützrohres (18) und der vor der Montage des Stützrohres (18) zwischen den beiden Flanschabschnitten (16) vorhandene lichte axiale Abstand zweckmäßigerweise so aufeinander abgestimmt sind, dass die Umfangswand (13) durch das montierte, segmentierte Stützrohr (18) eine axiale Zugvorspannung erfährt.

12. Quetschventil nach einem der Ansprüche 1 bis 11, **dadurch gekennzeichnet, dass** mindestens ein Schalenelement (26, 27) des Stützrohres (18) eine radiale Durchbrechung (43) aufweist, durch die hindurch ein Quetschmittel (19) auf die Umfangswand (13) einwirken kann, um Letztere zur Verringerung des zur Verfügung gestellten Durchflussquerschnittes zusammenzuquetschen.

13. Quetschventil nach Anspruch 12, **dadurch gekennzeichnet, dass** die mindestens eine radiale Durchbrechung (43) als Fluidkanal (46) ausgebildet ist, durch den hindurch ein als Quetschmittel fungierendes fluidisches Druckmedium in den Bereich des Außenumfangs der Umfangswand (13) des Ventilgliedes (14) leitbar ist, oder dass die mindestens eine radiale Durchbrechung (43) eine Durchgriffsöffnung (47) ist, durch die hindurch ein als Quetschmittel fungierendes, bezüglich der Ventilglied-Längsachse (17) radial bewegliches Quetschelement (48) mechanisch auf die Umfangswand (13) des Ventilgliedes (14) einwirken kann.

14. Quetschventil nach einem der Ansprüche 1 bis 13, **dadurch gekennzeichnet, dass** die beiden Fluidanschlüsse (8) an zwei Anschlussstücken (5, 6) des Ventilgehäuses (2) ausgebildet sind, zwischen denen die patronenartige Baueinheit (32a, 32b) lösbar axial verspannt ist.

15. Quetschventil nach einem der Ansprüche 1 bis 14, **dadurch gekennzeichnet, dass** die Schalenelemente (26, 27) lösbar an das Ventilglied (14) angesetzt sind.

16. Quetschventil nach einem der Ansprüche 1 bis 15, **dadurch gekennzeichnet, dass** der die Umfangswand (13) des Ventilgliedes (14) aufnehmende Rohrkanal (22) des Stützrohres (18) einen sich von axial entgegengesetzten Seiten her zum längsmittigen Bereich hin verjüngenden Querschnitt aufweist, wobei der Rohrkanal (22) und/oder die Umfangswand (13) des Ventilgliedes (14) zweckmäßigerweise einen länglichen Querschnitt aufweisen.

## Claims

1. Pinch valve, with a valve casing (2), in which there extends between two fluid ports (8) a hose-like valve member (14) with a flexible peripheral wall (13) which may be pinched together at right-angles to the valve member longitudinal axis (17) in order to vary the flow cross-section, and which is encompassed by a rigid support tube (18) limiting its radial expansion and with which it is combined into a cartridge-like unit (32a, 32b) inserted axially in the valve casing (2) so as to be removable and which consists of several shell elements (26, 27) lined up around the peripheral wall (13) in the circumferential direction (24) of the peripheral wall (13) of the valve member (14) and each with a bow-shaped cross-section, and attached to the outside of the hose-like valve member (14) in a radial direction relative to the valve member longitudinal axis (17), **characterised in that** a securing body (28a, 28b) is provided which encompasses the support tube (18) comprised of several shell elements (26, 27) and holds the shell elements (26, 27) together as a tubular structure.

2. Pinch valve according to claim 1, **characterised in that** the securing body (28a, 28b) is a separate component from the valve casing (2).

3. Pinch valve according to claim 1 or 2, **characterised in that** the securing body (28a, 28b) is tubular in form and encompasses the support tube (18) coaxially.

4. Pinch valve according to any of claims 1 to 3, **characterised in that** the securing body (28a, 28b) is a component part of the cartridge-like unit (32a, 32b) inserted releasably in the valve casing (2).

5. Pinch valve according to any of claims 1 to 4, **characterised in that** the securing body (28a, 28b) forms a guide element for an axially movable pressure-loading device (53) coaxially encompassing it and which is able to act on at least one radially movable pinch element (48) through which the peripheral wall (13) of the valve member (14) may be squeezed together.

6. Pinch valve according to any of claims 1 to 5, **characterised in that** the securing body (28a, 28b) has in the peripheral area of the valve member (14) at least one radial aperture (44) which allows the passage of pinch means (19) acting on the peripheral wall (13) of the valve member (14).

7. Pinch valve according to any of claims 1 to 6, **characterised in that** the module comprised of valve member (14) and support tube (18) is inserted releasably in the securing body (28a, 28b).

8. Pinch valve according to claim 7, **characterised in that** position setting means (62) presetting the relative rotation angle position and engaging positively with one another are provided on the securing body (28a, 28b) and on the shell elements (26, 27) of the support tube (18).

9. Pinch valve according to any of claims 1 to 8, **characterised in that** the support tube (18) is comprised of only two shell elements (26, 27), each with a circular arc extension of 180°.

10. Pinch valve according to any of claims 1 to 9, **characterised in that** position setting means (62) engaging positively with one another are provided on the shell elements (26, 27) and on the valve member (14) for presetting the peripheral position of the shell elements (26, 27) adopted in the circumferential direction (24) with reference to the valve member (14).

11. Pinch valve according to any of claims 1 to 10, **characterised in that** the valve member (14) has at each of its two ends a radially protruding flange section (16), wherein the support tube (18) is mounted axially between these two flange sections (16) and is flanked by them at the ends, and wherein the length of the support tube (18) and the axial clearance between the two flange sections (16) before fitting the support tube (18) are expediently so matched to one another that the peripheral wall (13) undergoes an axial tensile preload from the installed, segmented support tube (18).

12. Pinch valve according to any of claims 1 to 11, **characterised in that** at least one shell element (26, 27) of the support tube (18) has a radial aperture (43) through which pinch means (19) are able to act on the peripheral wall (13) so as to squeeze the latter together to reduce the available flow cross-section.

13. Pinch valve according to claim 12, **characterised in that** the radial aperture or apertures (43) is or are in the form of a fluid passage (46) through which a fluidic pressure medium acting as pinch means may be fed into the area of the outer periphery of the peripheral wall (13) of the valve member (14), or that the radial aperture or apertures (43) is or are a feed-through opening (47) through which a radially movable pinch element (48) acting as pinch means may act physically on the peripheral wall (13) of the valve member (14).

14. Pinch valve according to any of claims 1 to 13, **characterised in that** the two fluid ports (8) are formed on two connection pieces (5, 6) of the valve casing (2), between which the cartridge-like unit (32a, 32b) is axially and releasably clamped.

15. Pinch valve according to any of claims 1 to 14, **characterised in that** the shell elements (26, 27) are attached releasably to the valve member (14).

16. Pinch valve according to any of claims 1 to 15, **characterised in that** the tubular passage (22) of the support tube (18) accommodating the peripheral wall (13) of the valve member (14) has a cross-section tapering from axially opposite sides towards the longitudinal centre area, wherein the tubular passage (22) and/or the peripheral wall (13) of the valve member (14) expediently have an elongated cross-section.

## Revendications

1. Vanne à manchon avec un boîtier de vanne (2), dans lequel s'étend un organe de vanne (14) en forme de tuyau présentant une paroi périphérique flexible (13) entre deux raccords fluidiques (8), dont la paroi périphérique (13) peut être écrasée transversalement à l'axe longitudinal d'organe de vanne (17) afin de modifier la section transversale de débit, et qui est entouré par un tube support (18) rigide délimitant son élargissement radial, avec lequel il est assemblé pour former une unité de construction (32a, 32b) de type cartouche insérée de manière amovible axialement dans le boîtier de vanne (2) et qui se compose de plusieurs éléments de coque (26, 27) présentant respectivement une section transversale en forme d'arc et juxtaposés autour de la paroi périphérique (13) dans le sens périphérique (24) de la paroi périphérique (13) de l'organe de vanne (14), éléments de coque (26, 27) qui sont placés dans le sens radial par rapport à l'axe longitudinal d'organe de vanne (17) à l'extérieur sur l'organe de vanne (14) en forme de tuyau, **caractérisée en ce qu'**est présent un corps de sûreté (28a, 28b) maintenant ensemble les éléments de coque (26, 27) pour former la structure de tube et entourant le tube support (18) composé de plusieurs éléments de coque (26, 27).

2. Vanne à manchon selon la revendication 1, **caractérisée en ce que** le corps de sûreté (28a, 28b) est un composant séparé par rapport au boîtier de vanne (2).

3. Vanne à manchon selon la revendication 1 ou 2, **caractérisée en ce que** le corps de sûreté (28a, 28b) est réalisé en forme de tube et entoure coaxialement le tube support (18).

4. Vanne à manchon selon l'une quelconque des revendications 1 à 3, **caractérisée en ce que** le corps de sûreté (28a, 28b) est un composant de l'unité de construction (32a, 32b) de type cartouche insérée de manière amovible dans le boîtier de soupape (2).

5. Vanne à manchon selon l'une quelconque des revendications 1 à 4, **caractérisée en ce que** le corps de sûreté (28a, 28b) forme un élément de guidage pour un dispositif d'alimentation (53) mobile axialement, l'entourant coaxialement, qui peut agir sur au moins un élément d'écrasement (48) mobile radialement, par lequel la paroi périphérique (13) de l'organe de vanne (14) peut être écrasée.

6. Vanne à manchon selon l'une quelconque des revendications 1 à 5, **caractérisée en ce que** le corps de sûreté (28a, 28b) présente, dans la zone périphérique de l'organe de vanne (14), au moins une fissure radiale (44) qui permet le passage d'un moyen d'écrasement (19) agissant sur la paroi périphérique (13) du boîtier de soupape (14).

7. Vanne à manchon selon l'une quelconque des revendications 1 à 6, **caractérisée en ce que** l'ensemble se composant de l'organe de vanne (14) et du tube support (18) est emboîté de manière amovible dans le corps de sûreté (28a, 28b).

8. Vanne à manchon selon la revendication 7, **caractérisée en ce que** des moyens de consigne de position (62) prescrivant la position angulaire rotative relative, venant en prise t les uns dans les autres par complémentarité de formes sont présents sur le corps de sûreté (28a, 28b) et sur les éléments de coque (26, 27) du tube support (18).

9. Vanne à manchon selon l'une quelconque des revendications 1 à 8, **caractérisée en ce que** le tube support (18) est composé de seulement deux éléments de coque (26, 27) qui présentent chacun une étendue arquée de 180°.

10. Vanne à manchon selon l'une quelconque des revendications 1 à 9, **caractérisée en ce que** des moyens de consigne de position (62) venant en prise les uns dans les autres par complémentarité de formes sont disposés sur les éléments de coque (26, 27) et sur l'organe de vanne (14), lesquels prescrivent la position périphérique occupée dans le sens périphérique (24) par rapport à l'organe de vanne (14) des éléments de coque (26, 27).

11. Vanne à manchon selon l'une quelconque des revendications 1 à 10, **caractérisée en ce que** l'organe de vanne (14) présente, sur ses deux extrémités, respectivement une section de bride (16) s'élevant radialement, le tube support (18) étant disposé axialement entre ces deux sections de bride (16) et étant flanqué côté avant par celles-ci, et la longueur du tube support (18) et la distance axiale intérieure présente avant le montage du tube support (18) entre les deux sections de bride (16) sont adaptées l'une à l'autre dé manière appropriée de sorte que la paroi périphérique (13) subisse une précontrainte de traction axiale par le tube support (18) segmenté monté.

12. Vanne à manchon selon l'une quelconque des revendications 1 à 11, **caractérisée en ce qu'**au moins un élément de coque (26, 27) du tube support (18) présente une fissure radiale (43), par laquelle un moyen d'écrasement (19) peut agir sur la paroi périphérique (13) afin d'écraser cette dernière pour la diminution de la section transversale de débit mise à disposition.

13. Vanne à manchon selon la revendication 12, **caractérisée en ce que** l'au moins une fissure radiale (43) est réalisée comme un canal fluidique (46) par lequel un moyen de pression fluidique fonctionnant comme un moyen d'écrasement peut être conduit dans la zone de la périphérie extérieure de la paroi périphérique (13) de l'organe de vanne (14), ou **en ce que** l'au moins une fissure radiale (43) est une ouverture de passage (47), par laquelle un élément d'écrasement (48) mobile radialement par rapport à l'axe longitudinal d'organe de vanne (17), fonctionnant comme un moyen d'écrasement peut agir mécaniquement sur la paroi périphérique (13) de l'organe de vanne (14).

14. Vanne à manchon selon l'une quelconque des revendications 1 à 13, **caractérisée en ce que** les deux raccords fluidiques (8) sont réalisés sur deux pièces de raccord (5, 6) du boîtier de vanne (2), entre lesquelles l'unité de construction (32a, 32b) de type cartouche est serrée axialement de manière amovible.

15. Vanne à manchon selon l'une quelconque des revendications 1 à 14, **caractérisée en ce que** les éléments de coque (26, 27) sont placés de manière amovible sur l'organe de vanne (14).

16. Vanne à manchon selon l'une quelconque des revendications 1 à 15, **caractérisée en ce que** le canal de tube (22) recevant la paroi périphérique (13) de l'organe de vanne (14) du tube support (18) présente une section transversale se rétrécissant depuis des côtés axialement opposés vers la zone médiane longitudinale, le canal de tube (22) et/ou la paroi périphérique (13) de l'organe de vanne (14) présentent de manière appropriée une section transversale oblongue.
